Europäisches Patentamt

European Patent Office

Office européen des brevets

(19)

(11) Veröffentlichungsnummer: **0 106 006**
**B1**

(12) **EUROPÄISCHE PATENTSCHRIFT**

(45) Veröffentlichungstag der Patentschrift: **16.08.90**

(51) Int. Cl.⁵: **H 02 P 7/62**, H 02 P 7/44

(21) Anmeldenummer: **82890149.6**

(22) Anmeldetag: **18.10.82**

(54) Verfahren zur Vorgabe des Ständerdurchflutungsvektors.

(43) Veröffentlichungstag der Anmeldung:
**25.04.84 Patentblatt 84/17**

(45) Bekanntmachung des Hinweises auf die
Patenterteilung: **16.08.90 Patentblatt 90/33**

(84) Benannte Vertragsstaaten:
**AT CH DE IT LI SE**

(56) Entgegenhaltungen:
**AT-A-32 384 7**
**AT-A-34 104 6**
**DE-A-2 552 602**
**DE-A-2 704 533**
**DE-A-2 756 952**
**US-A-4 028 600**

(73) Patentinhaber: **ELIN-UNION Aktiengesellschaft
für elektrische Industrie
Penzinger Strasse 76
A-1141 Wien (AT)**

(72) Erfinder: **Schiftner, Karl, Dipl.-Ing.Dr.
Argentinierstrasse 63/3/9
A-1040 Wien (AT)**

(74) Vertreter: **Krause, Peter
Penzinger Strasse 76
A-1141 Wien (AT)**

**Beschreibung**

Die Erfindung betrifft ein Verfahren zur Vorgabe des Ständerdurchflutungsvektors von Drehstrommaschinen bei Speisung durch einen mehrphasigen bzw. p-pulsigen, vorzugsweise 6-pulsigen Stromrichter mit eingeprägtem Strom, bei dem p diskrete Ständerdurchflutungszeigerlagen vorliegen, Ein Verfahren gemäß Oberbegriff des Anspruchs ist aus der AT—PS 341 046 bekannt.

Bei allen Zwischenkreisumrichtern treten Stromoberschwingungen in den Strängen der gespeisten Drehstrommaschine auf, die zu Momentpentelungen des Luftspaltdrehmomentes führen. Die Pulszahl p des maschinenseitigen Stromrichters und seine Speisefrequenz $f_m$ bestimmen die Frequenz $f_p$ der Pendelmomente mit $f_p = pf_m$. Die Amplitude der Pendelmomente hängt von der Pulszahl des Stromrichters und der Belastung der Drehstrommaschine ab. Beim Stromzwischenkreisumrichter ist darüber hinaus das Spektrum der Ausgangsströme fest vorgegeben, wenn man vom Einfluß der Kommutierung des Maschinenstromrichters absieht.

Die Größe der Pendelmomente ist dann bei festgehaltenem Fluß nur von der Größe des Zwischenkreisstromes, der die Amplitude des Grunschwingungsausgangsstromes des maschinenseitigen Stromrichters bestimmt, und vom Lastwinkel zwischen Stromgrundschwingung und Flußgrundschwingung abhängig.

Die Frequenz der Pendelmomente nimmt mit sinkender Speisefrequenz des Zwischenkreisumrichters ab führt bei kleiner Frequenz weger der geringen Glättungswirkung der rotierenden Schwungsmassen zu unrundem, ruckendem Lauf.

Die Verbesserung der Anlaufeigenschaften und die Anhebung der Frequenz der anregenden Luftspaltpendelmomente über die kritischen Drehschwingungsfrequenzen eines Wellenstranges sind die wesentlichen Zielsetzungen, die mit den in der AT—PS Nr. 323 847, der AT—PS Nr. 341 046, der DE—OS Nr. 27 04 533 sowie der DE—OS Nr. 27 56 952 beschriebenen 2-Strompulsverfahren erreicht werden soll.

Diesen Verfahren liegt der gemeinsame Gedanke zugrunde, daß die effektive Mittellage des (Stators-) Durchflutungs-Raumzeigers bzw. (Stator-) Strom-Raumzeigers über die Verweilzeiten in zwei -und nur zwei benachbarten diskreten Durchflutungszeigerlagen während jeweils eines Sechstels einer Grundschwingungsperiode vorgegeben wird. Bei 6-pulsigen Stromrichtern existieren 6 diskrete Zeigerlagen, die den 6 Schaltzuständen des Maschinenstromrichters nach erfolgter Kommutierung entsprechen, aus denen während einer Sechstelperiode jeweils zwei benachbarte ausgewählt werden. Der Stromverlauf der Umrichterausgangsströme geht im Pulsbetrieb von einem geschlossenen 120° Stromblock während jeder Halbperiode in eine ungerade Anzahl von Strompulsen und -lücken unterschiedlicher Breite mit im Mittel trapezförmigem Verlauf über, wobei Strompulse einer Stromrichtung während einer Halbperiode von 180° und Strompulse der umgekehrten Stromrichtung in einer zweiten Halbperiode auftreten können. Die Winkelsumme der positiven Strompulse bleibt mit 120° gleich wie beim geschlossenen 120° Stromblock.

Aus der AT—PS Nr. 323 847 geht hervor, daß der Ständerstromvektor in jeder beliebigen "effektiven" Zwischenlage zwischen zwei benachbarten diskreten Zeigerlagen festgehalten werden kann. Dies trifft jedoch nur bedingt zu.

Der Maschinenstromrichter eines Stromzwischenkreisumrichters zum Speisung einer Drehstromasynchronmaschine (DAM) ist ein selbstgeführter, zwangskommutierter Stromrichter, dessen Kommutierungselemente aus im Umrichter angeordneten Kommuntierungskondensatoren und den Streuinduktivitäten der gespeisten DAM bestehen. Beide zusammen geben die notwendige und einzuhaltende Kommutierungszeit $t_k$ vor.

Diese Zeit ist bei kleiner Speisefrequenz des Stromrichters, unabhängig vom Lastzustand, nahezu konstant.

Die Kommutierungszeit $t_k$ ist im Pulsbetrieb zugleich auch die minimale Pulsbreite $t_{min}$ bzw. Pulslücke der Strompulse bzw. Stromlücken in den Ausgangsströmen des Umrichters, die ohne Verlust der Kommutierungsfähigkeit des Umrichters nicht unterschritten werden darf. Andererseits soll die Pulsfrequenz $f_T$, die im Pulsbetrieb die Frequenz der Drehmomentenpendelungen beschreibt, entweder konstant gehalten werden oder zumindest einen vorgegebenen Minimalwert nicht unterschreiten.

Dies bedeutet aber, daß das Tastverhältnis $x_i = f_T \cdot t_i$, das die Einschalt (Leit-) Zeit benachbarter Zweigthyristoren der oberen oder unteren Brückenhälfte während des p-ten Teiles einer Grundschwingungsperiode verändert und damit die Änderung der effektiven Zwischenlage des Durchflutungsraumzeigers beschreibt, nicht beliebig klein bzw. beliebig groß gemacht werden kann:

$$f_T \cdot t_{min} = x_{min} \leq x \leq x_{max} = 1 - f_T \cdot t_{min}$$

Die Vorgabe der effektiven Wnkellage $\alpha$ des Durchflutungsraumzeigers ist somit beim 2-Strangpulsverfahren nicht jeweils uber die gesamte Breite von p Winkelbereichen der Breite

$$\frac{360°}{P} \quad \text{mit } \alpha_i \leq \alpha \leq \alpha_i + \frac{2\pi}{p} \qquad \alpha_i = \alpha_o + i\,\frac{2\pi}{p},$$

2

$i = 1, \ldots, p$ möglich, wie es für den völlig runden Lauf der umrichtergespeisten Drehstrommaschinen wünschenswert wäre, sondern nur innerhalb der Grenzen:

$$\alpha_i + \alpha_{min} \leq \alpha \leq \alpha_i + \frac{2\pi}{p} - \alpha_{min}, \qquad \alpha_i = \alpha_o + i\,\frac{2\pi}{p}, \; i = 1, \ldots, p$$

Der Nullwinkel $\alpha_o$ beschreibt jeweils den Winkel eines der p diskreten Durchflutungszeiger gegenüber einem (Stator-) wirklungsfesten Bezugssystem.

Aufgabe der Erfindung ist es, ein Verfahren zu schaffen, das zumindest in der vorlaufenden und nachlaufenden Umgebung der p diskreten Durchflutungsraumzeigerlagen.

$$\alpha_i \leq \alpha \leq \alpha_i + \alpha_{min}$$

und

$$\alpha_i + \frac{2\pi}{p} - \alpha_{min} \leq \alpha \leq \alpha_i + \frac{2\pi}{p}$$

mit

$$\alpha_i = \alpha_o + i\,\frac{2\pi}{p}, \; i = 1, \ldots, p$$

verwendet wird und die obigen Einschränkungen vermeidet.

Die Erfindung ist durch die kennzeichnenden Merkmale des Anspruchs definiert. Bei diesem erfindungsgemäßen Pulsverfahren werden bei einem vollen Umlauf des Durchflutungsraumzeigers 2 p-mal die 2 oder 3 ausgewählten diskreten Durchflutungszeigerlagen, zwischen denen geschaltet (gepolt) wird, abhängig vom vorliegenden Winkelbereich gewechselt.

Bei Lage des effektiven Zeigers in Winkelbereich

$$\alpha_i + \alpha_{min} < \alpha < \alpha_i + \frac{2\pi}{p} - \alpha_{min}$$

wird zwischen 2 benachbarten diskreten Zeigerlagen geschaltet, im Bereich

$$\alpha_i - \alpha_{min} \leq \alpha \leq \alpha_i + \alpha_{min}$$

wird zwischen 3 benachbarten diskreten Zeigerlagen gepulst.

Aus der DE—A—2 552 602 ist ein dreistrangiges Pulsverfahren bei einer Drehstrommaschine bekannt.

Im Zeitverlauf des Umrichterausgangsstromes mit der Periode $T_M$ ist das abschnittsweise Pulsen zwischen 3 diskreten Durchflutungszeigerlagen durch Strompulse beiden Polarität über den Zeitraum

$$\frac{\alpha_{min}}{\pi}$$

$T_M$ und der volle Stromblock über den Zeitraum

$$\left(\frac{1}{6} - \frac{\alpha_{min}}{\pi}\right)$$

$T_M$ innerhalb einer Halbperiode $T_M/2$ deutlich erkennbar.

Der Schaltzustand des Stromrichters wird hier außer durch einen p-fachen Ringzähler durch zwei binäre Pulssignale P 1 und P 2 beschrieben, die aussagen, ob auf die vor- oder nachlaufende diskrete Durchflutungszeigerlage geschaltet und wie lange in dieser verweilt werden soll. Die Pulsmuster P 1 und P 2 werden entweder freilaufend durch Abtastung zweier Referenzschwingungen mit einer dreiecksförmigen Abtastschwingung gebildet oder fest in Speichern abgelegt.

Vorteilhaft wirkt sich bei diesem erfindungsgemäßen Pulsverfahren die bessere Anpassung der dem Steuerverfahren zugrunde liegenden Referenzschwingungen an eine Sinusschwingung aus, die zu einer Reduktion der niederfrequenten Pendelmomente und zu praktisch völlig rundem Lauf der DAM bis zum Stillstand führt. Der Durchflutungsraumzeiger führt im Gegensatz sum 2-Strangpulsen auch bei tiefsten Speisefrequenzen praktisch keine Winkelsprünge aus, es gibt lediglich kleine Amplitudensprünge, die sich in der Änderung der Zeigerlänge zeigen.

Die Verringerung des Grundschwingungsstromes im Pulsbetrieb gegenüber der Grundschwingungstakung mit 120° Strömblöcken und festem Zwischenkreisstrom beträgt i.a. weniger als 15%. Vorteilhaft ist schließlich die Verwendbarkeit freilaufender Pulsmuster bis zur Grundschwingungsfrequenz $f_M \leq f_T/6$.

Die Erfindung samt ihren Ausgestaltungen wird nachstehend an Hand der Zeichnungen für den Fall der Speisung einer 3-strängigen Drehstromasynchronmaschine von einem 6-pulsigen Stromzwischenkreisumrichter in Phasenfolgeschaltung näher erläutert.

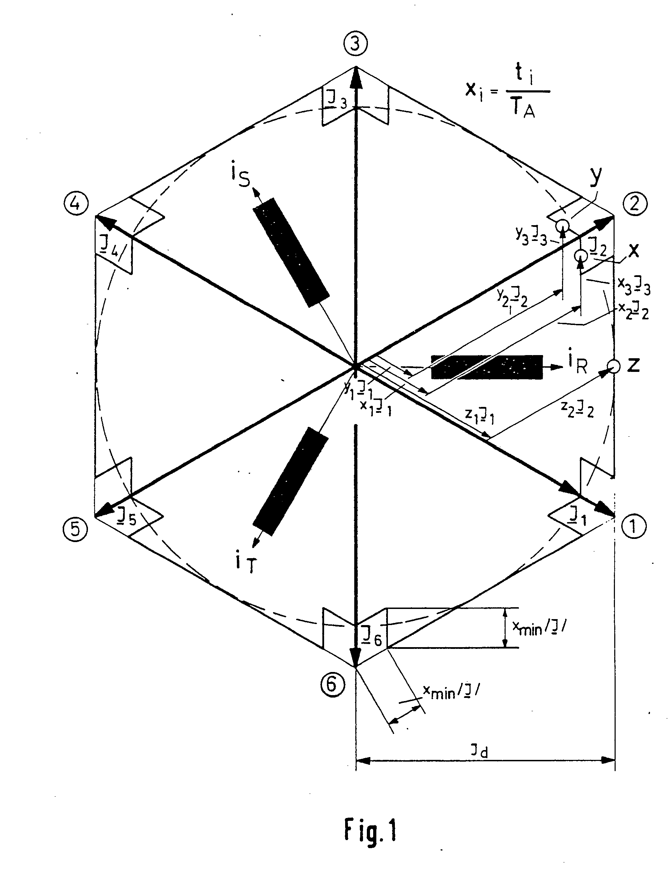

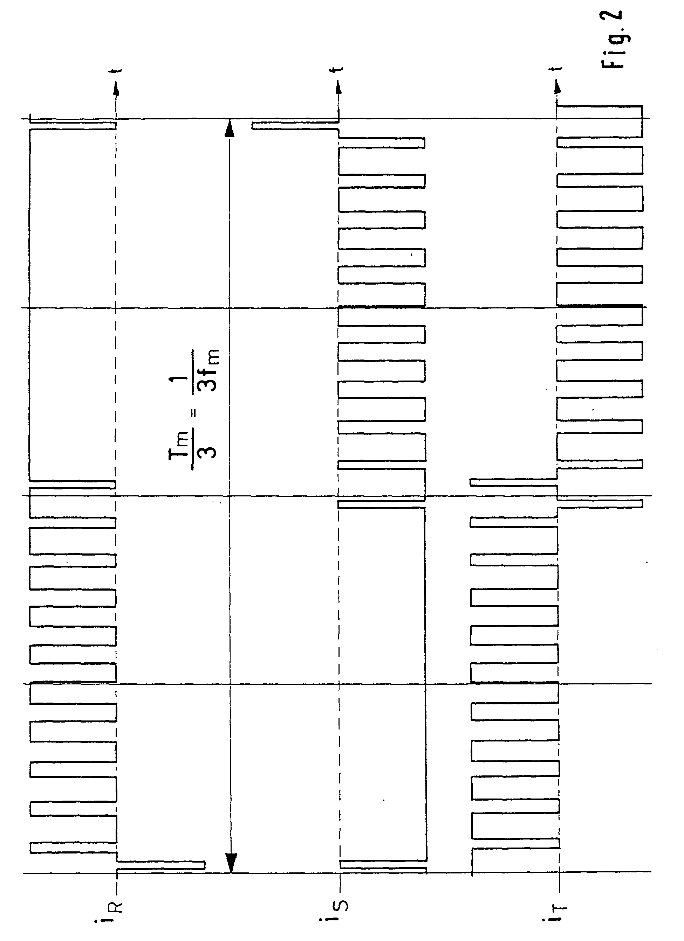

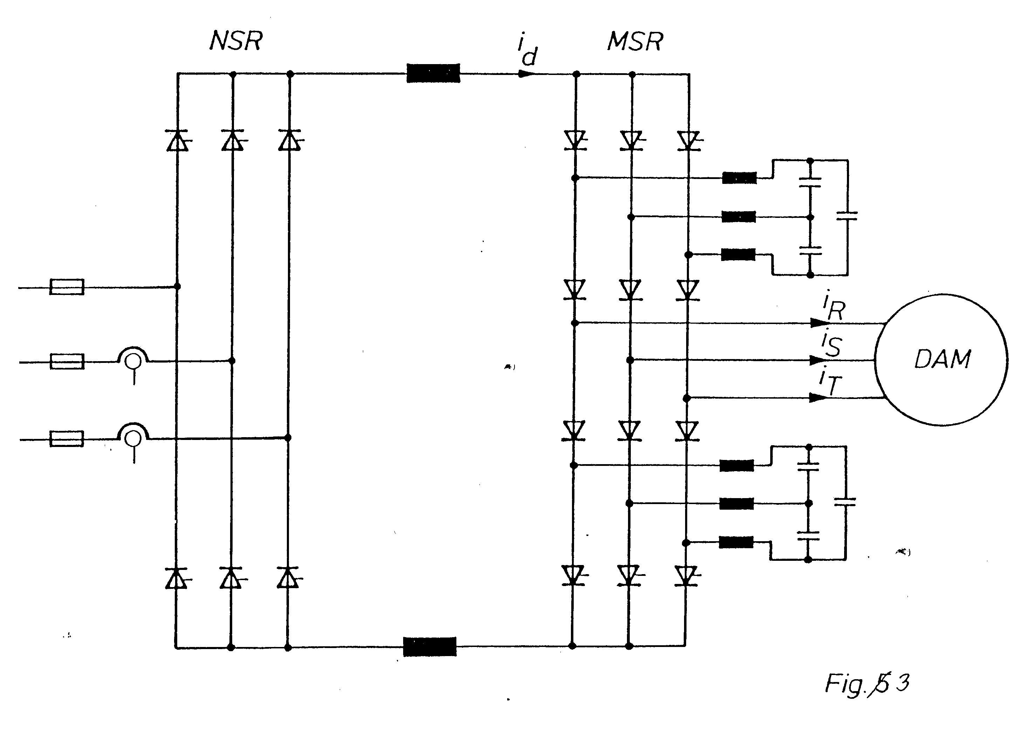

Fig. 1 zeigt ein Diagramm des Ständerdurchflutungsraumzeigers I bei abschnittsweisen Schalten zwischen 2 und mehr als 2 benachbarten Zeigerlagen, Fig. 2 die zugehörigen Zeitverläufe der Umrichterausgangsströme $i_R$, $i_S$, $i_T$ und Fig. 3 ein Prinzipschaltbild eines 6-pulsigen Stromzwischenkreisumrichters mit einem Maschinenstromrichter in Phasenfolgeschaltung.

Die in Figur 1 dargestellten 6 diskreten Durchflutungsraumzeiger $I_i$, $i = 1, \ldots, 6$ stützen sich auf folgende Definition des Durchflutungsraumzeigers, einer komplexen Rechengröße

$$I = \frac{2}{3} (i_R + a\, i_S + a^2\, i_T)$$

Darin bedeuten $i_R = i_R$ (t), $i_S = i_S$ (t) und $i_T = i_T$ (t) die Augenblickswerte der Umrichterausgangsströme. Die Dreher

$$a = -\frac{1}{2} + j\,\frac{\sqrt{3}}{2} \quad \text{und} \quad a^2 = -\frac{1}{2} - j\,\frac{\sqrt{3}}{2}$$

berücksichtigen die Achsigkeit der 3-strängigen DAM.

Die Tabelle 1 gibt den Zusammenhang zwischen den 6 möglichen Schaltstellungen des Stromrichters und den zugehörigen diskreten Durchflutungsraumzeigerlagen an.

TABELLE 1

Diskrete Durchflutungsraumzeiger

| $i$ | $i_R$ | $i_S$ | $i_T$ | $I_i/i_d$ | |
|---|---|---|---|---|---|
| 1 | $i_d$ | $-i_d$ | 0 | $\frac{2}{3}(1-a)$ | $= 1 - j\,\frac{1}{\sqrt{3}}$ |
| 2 | $i_d$ | 0 | $-i_d$ | $\frac{2}{3}(1-a^2)$ | $= 1 + j\,\frac{1}{\sqrt{3}}$ |
| 3 | 0 | $i_d$ | $-i_d$ | $\frac{2}{3}(a-a^2)$ | $= j\,\frac{2}{\sqrt{3}}$ |
| 4 | $-i_d$ | $i_d$ | 0 | $\frac{2}{3}(-1+a)$ | $= -1 + j\,\frac{1}{\sqrt{3}}$ |
| 5 | $-i_d$ | 0 | $i_d$ | $\frac{2}{3}(-1+a^2)$ | $= -1 - j\,\frac{1}{\sqrt{3}}$ |
| 6 | 0 | $-i_d$ | $i_d$ | $\frac{2}{3}(-a+a^2)$ | $= -j\,\frac{2}{\sqrt{3}}$ |

Die in der Tabelle 1 in den Spalten 2, 3 und 4 festgehaltenen Schaltfunktionen für die Ströme $i_R$, $i_S$ und $i_T$ können zugleich als Verteilfunktionen für den positiv und den negativ bewerteten Zwischenkreisstrom aufgefaßt werden. Bei der hier gewählten Sternschaltung der DAM bedeutet dies in der Schaltstellung 1: Der gemäß Fig. 3 vom Netzstromrichter (NSR) eingeprägte Zwischenkreisstrom $i_d$ fließt über die positive Brückenhälfte des Maschinenstromrichters (MSR) und die Strangwicklung R zum Sternpunkt der DAM und

**EP 0 106 006 B1**

von dort negativ über die Strangwicklung S und die negative Brückenhälfte des MSR in den Zwischenkreis zurück. Mit den Strömen durch die Wicklungsteile R und S ist eine bestimmte Durchflutung in Betrag und Richtung gegeben, die mit dem Durchflutungsraumzeiger I vollständig beschrieben werden kann.

Die sechs diskreten Durchflutungsraumzeiger $I_1, \ldots, I_6$ werden — abgesehen vom Kommutierungszeitraum — ausschließlich eingenommen. Bei Grundschsingungtaktung weden die Schaltstellungen 1 bis 6 in auf- oder absteigendem Sinn ohne Zwischenschaltungen durchlaufen, der Durchflutungszeiger springt dann von einer diskreten Lage zur nächsten im Gegenuhrzeiger- bzw. Uhrzeigersinn. Jede Weiterschaltung im Umlaufsinn bedeutet ein sprunghaftes Vorlaufen der Durchflutung gegenüber dem mit annähernd konstanter Winkelgeschwindigkeit umlaufenden Fluß und ein anschließendes, kontinuierliches, relatives Zurückbleiben. Die Länge jedes Durchflutungsraumzeigers drückt den Betrag der Durchflutung in der jeweiligen Richtung aus, die während einer 1/6-Periode anliegt. Die Größe der Durchflutung in jeder der 6 diskreten Raumrichtungen ist bei Grundschwingungtaktung nur von der Größe des Zwischenkreisstromes $i_d$ abhängig, wenn man näherungsweise — wie oben vorausgesetzt — von einer unendlich raschen verlaufenden Kommutierung ausgeht.

Diese Näherungsbetrachtung soll auch bei der Diskussion des in den Zeichnungen dargestellten Pulsbetriebes beibehalten werden. Im Pulsbetrieb wird während 1/6-Periode zwischen mehreren Schaltstellungen des Stromrichters hin- und hergeschaltet. Der Umlaufsinn des effektiven Durchflutungsraumzeigers wird dabei nicht durch die Weiterschaltung von einer diskreten Lage zur nächsten vorgegeben, sondern durch Vergrößern bzw. Verkleinern der Einschaltzeiten bestimmter ausgewählter Schaltstellungen des Maschinenstromrichters MSR und damit der Verweilzeiten $t_i$ in den diskreten Durchflutungsraumzeigerlagen. Der Wechsel der Schaltstellungen erfolgt in Form eines periodischen Schaltspieles mit der Periode $T_A$. Diese Periode ist kleiner oder höchstens gleich 1/6 der Grundschwingungsperiode

$$\frac{T_M}{6}$$

des MSR weshalb die Durchflutung während $T_M/6$ mehrmals ihre Richtung wechselt. Die Größe der Durchflutung in jeder der ausgezeichneten Richtungen ist dann nicht allein von der Größe des Zwischenkreisstromes id abhängig sondern auch von der mittlern auf die Taktperiode $T_A$ bezogenen Einschaltzeit $x_i = t_i/T_A$ in jeder dieser Lagen. Die Summe der bezogenen Einschaltzeiten $x_i$ ist $\Sigma x_i = 1$, wenn wieder die Kommutierungszeit vernachlässigt wird.

Die Durchflutungen in den ausgezeichneten Raumrichtungen, die entsprechend den bezogenen Einschaltzeiten verkleinert werden, sind im Durchflutungszeigerdiagramm als verkürzte Durchflutungszeiger $x_i I_i$ darstellbar. Die vektorielle Summe der so verkürzten Durchflutungszeiger einer Taktperiode $T_A$ beschreibt dann die Bahn des effektiven Durchflutungszeigers

$$I_\Sigma = \sum_i x_i I_i$$

dessen Länge immer kleiner als die Länge eines der 6 diskreten Durchflutungszeiger im Grundschwindungsbetrieb ist:

$$|I_\Sigma| = |\sum_i x_i I_i| < |I_i|$$

Fig. 1 zeigt nun das Diagramm der Ständerdurchflutungszeiger bei abschnittsweisem Schalten zwischen 2 und mehr als 2 benachbarten diskreten Durchflutungszeigerlagen. Die Zeigerspitzen der 6 markant dargestellten Durchflutungszeiger sind in Form eines Sechseckes verbunden, das näherungsweise die Bahnkurve des effektiven Durchflutungszeigers bei Anwendung des bekannten Zweistrangpulsverfahrens beschreibt. Der herausgegriffene Punkt Z wird bei gleichen Einschaltzeiten $Z_1 = Z_2$ der Schaltstellungen 1 und 2 des Umrichters angenommen. Dies entspricht gleicher Verweilzeit in den Durchflutungszeigerlagen $I_1$ und $I_2$. Ausgehend von Punkt Z können die bezogenen Einschaltzeiten aus Kommutierungsgründen nicht beliebig verkleinert werden, weshalb der effektive Durchflutungszeiger nicht beliebig nahe an jede der sechs diskreten Durchflutungszeigerlagen herangeführt werden kann.

Hier setzt das Verfahren an, bei dem in der Umgebung der diskreten Zeigerlagen zwischen 3 benachbarten diskreten Zeigern geschaltet wird. In Fig. 1 sind in der vor- und nachlaufenden Umgebung des Zeigers $I_2$ je ein Punkt x und ein Punkt y markiert. Der resultierende Durchflutungszeiger zum Punkt x wird über die vektorielle Summe $x_1 I_1 + x_2 I_2 + x_3 I_3$ beschrieben, wobei die resultierende Einschaltzeit $x_3$ mit $x_3 = x_{min}$ gleich der minimal möglichen gehalten wird. Beim resultierenden Durchflutungszeiger $y_1 I_1 + y_2 I_2 + y_3 I_3$ zum Punkt Y nimmt $y_1 = x_{min}$ den minimalen, von der Kommutierungszeit begrenzten Wert an. Bei abschnittsweisem Schalten zweischen 2 und 3 benachbarten Zeigerlagen werden somit die Verbindungsgeraden zwischen den Zeigerspitzen nur bis in eine durch die Schaltzeitbegrenzung vorgegebene Umgebung der diskreten Zeigerlagen durchlaufen, dann springt der Durchflutungszeiger auf eine kleinere Sechseckbahnkurve, um nach Verlassen der Umgebung des diskreten Durchflutungszeigers wieder auf die Außenbahn zurückzukehren.

Fig. 2 zeigt die Zeitverläufe der Umrrichterausgangsströme über einer 1/3 — Periode des MSR. Beim Vorzeichenwechsel der Stromgrundschwingung treten Strompulse beider Vorzeichen auf (s. Strom $i_T$).

5

**Patentanspruch**

Verfahren zur Vorgabe des Ständerdurchflutungsvektors einer drehstrommaschine bei Speisung durch einen mehrphasigen bzw. p-pulsigen, vorzugsweise 6-pulsigen Stromrichter mit eingeprägten Strom, bei dem p diskrete Ständerdurchflutungszeigerlagen vorliegen und wobei die effektive Lage $\alpha$ des Standerdurchflutungsvektors durch Schalten zwischen den p Zeigerlagen über die Verweizeit in den einzelnen Lagen vorgegeben wird, dadurch gekennzeichnet daß während des p-ten Teiles einer Grundschwingungsperiode im Bereich

$$\alpha_i + \alpha_{min} < \alpha < \alpha_i + \frac{2\pi}{p} - \alpha_{min}$$

zwischen zwei benachbarten Zeigerlagen und daß im Bereich

$$\alpha_i - \alpha_{min} \leq \alpha \leq \alpha_i + \alpha_{min}$$

einer diskreten Zeigerlage zwischen drei diskreten Zeigerlager des Durchflutungszeigers hin und hergeschaltet wird wobei der Winkel min der minimale Pulswinkel ist, bei dem die Einhaltung der von der Drehstrommaschine und dem Stromrichter vorgegebenen Kommutierungszeit gewährleistet ist, und dies durch zwei fest mit den Grundschwingungen des mehrphasigen Stromsystems verbundenen Referenzschwingungen erreicht wird, die, wie an sich bekannt, mit einer mit fester Frequenz freilaufenden dreieckförmigen Abtastschwingung verglichen werden wodurch entsprechende freilaufende Muster erzeugt werden.

**Revendication**

Procéde pour déterminer à l'avance le vecteur ampères-tours du stator d'une machine à champ tournant dans le cas où elle est alimentée par un redresseur de courant multiphasé ou à p impulsions, de préférence à 6 impulsions, avec courant indépendant de la charge, dans lequel p positions discrètes du vecteur ampères-tours du stator $\alpha_i$ sont présentes et dans lequel la position effective $\alpha$ du vecteur ampères-tours du stator est prédéterminée par masquage entre les p positions vectorielles sur le temps de séjour dans les différentes positions, caractérisé en ce que, pendant la p ième partie d'une période d'oscillation de base dans la région

$$\alpha_i + \alpha_{min} < \alpha < \alpha_i + \frac{2\pi}{p} - \alpha_{min}$$

entre deux positions vectorielles adjacentes dans la région

$$\alpha_i - \alpha_{min} \leq \alpha \leq \alpha_i + \alpha_{min}$$

une position vectorielle discrète est masquée et démasquée en alternance entre trois positions discrètes du vecteur ampères-tours, l'angle $\alpha_{min}$ étant l'angle d'impulsion minimum auquel le maintien du temps de commutation prédéterminé par la machine à champ tournant et le redresseur de courant est garanti, et ceci étant obtenu par deux oscillations de référence liées rigidement aux oscillations de base du système de courant multiphasé, lesdites oscillations de référence étant comparées de façon connue en soi à une oscillation d'exploration triangulaire, qui se déroule librement à une fréquence fixe, de sorte que l'on produit des dessins à déroulement libre.

**Claim**

A method of presetting the stator flux vector of a rotary current machine in the case of supply by a multiple phase or p-pulse, preferably 6-pulse current converter with impressed current, wherein p discrete stator flux indicator positions $\alpha_i$ are available and wherein the effective position $\alpha$ of the stator flux vector is determined by switching between the p indicator positions via the hold time in the individual positions, characterised in that during the p-th part of a fundamental oscillation period in the range

$$\alpha_i + \alpha_{min} < \alpha < \alpha_i + \frac{2\pi}{p} - \alpha_{min}$$

switching to and fro takes place between 2 adjacent indicator positions, and in the range

$$\alpha_i - \alpha_{min} \leq \alpha \leq \alpha_i + \alpha_{min}$$

of a discrete indicator position switching to and fro takes place between 3 discrete indicator positions of the flux indicator, the angle being $\alpha_{min}$ of the minimum pulse angle, wherein the switching time determined by the rotary current machine and the current converter is maintained and this is achieved by two reference oscillations which are constantly connected with the fundamental oscillations of the multiple phase current system, and which, as is known per se, are compared with a triangular scan oscillation which is free-running at constant frequency, whereby corresponding free-running patterns are produced.

7

Fig. 1

Fig. 2

$$\frac{T_m}{3} = \frac{1}{3f_m}$$

EP 0 106 006 B1

EP 0 106 006 B1

NSR

$i_d$

MSR

$i_R$

$i_S$

$i_T$

DAM

Fig. 3